# FASCICULE DE BREVET EUROPEEN

(11) **EP 0 843 798 B1**
(45) Date de publication et mention de la délivrance du brevet: **22.03.2000**
(21) Numéro de dépôt: 96928488.4
(22) Date de dépôt: 07.08.1996
(51) Int. Cl.: F24D 19/06, H05B 3/28

(54) **DISPOSITIF DE CHAUFFAGE ELECTRIQUE ET SON PROCEDE DE FABRICATION**
ELEKTRISCHES HEIZELEMENT UND VERFAHREN ZU SEINER HERSTELLUNG
ELECTRIC HEATER AND METHOD FOR MAKING SAME

(30) Priorité: 11.08.1995 FR 9509861
(43) Date de publication de la demande: 27.05.1998
(73) Titulaire: Oliger France, 57820 Lutzelbourg (FR)
(72) Inventeur: LANTZ, Marcel, F-57820 Lutzelbourg (FR)
(74) Mandataire: Rhein, Alain
(86) Numéro de dépôt international: FR9601258
(87) Numéro de publication internationale: WO9707366

(56) Documents cités:
- EP-A- 0 049 496
- EP-A- 0 357 945
- EP-A- 0 445 253
- EP-A- 0 533 072
- FR-A- 2 283 619
- GB-A- 1 164 285
- GB-A- 2 265 211

## Description

L'invention concerne un dispositif de chauffage électrique, tout particulièrement, sous forme d'un panneau mural, comprenant une résistance électrique chauffante noyée dans un matériau réfractaire sous forme d'une plaque ou d'un panneau. L'invention concerne, également, un procédé de fabrication d'un tel dispositif de chauffage électrique.

La présente invention trouvera son application dans le domaine des appareils de chauffage électrique.

Parmi les appareils de chauffage électrique l'on distingue, essentiellement, deux types, cette distinction portant, principalement, sur le principe de chauffage qu'ils mettent en application. Ainsi, il existe des appareils qui chauffent par convection l'air ambiant d'une pièce. Dans ces conditions, l'on dispose une résistance électrique chauffante à l'intérieur d'un contenant au travers duquel circule, par convection naturelle et/ou forcée, l'air de la pièce qui, au passage de ladite résistance chauffante, récupère les calories dissipées par cette dernière. De tels dispositifs de chauffage ont un fonctionnement du type tout ou rien, de sorte qu'il n'y a quasiment aucune inertie, ni à la mise en route, ni, surtout, lors de la coupure de l'alimentation en énergie électrique de la résistance. De ce fait, le chauffage d'une pièce ne peut être continuel et elle accuse, forcément, des variations de température dont les amplitudes sont fonction de la sensibilité de l'appareil.

Le second type de dispositif de chauffage communément rencontré, diffuse les calories qu'il produit par conduction et/ou rayonnement. Parmi ces dispositifs l'on distingue, tout particulièrement, ceux qui, au travers d'une résistance électrique chauffante, ont pour principe d'élever en température un panneau, notamment constitué en un matériau réfractaire, au contact duquel l'air ambiant recueille des calories, ou encore, qui transmet l'énergie emmagasinée par rayonnement.

Plus spécifiquement, dans le cadre de ce type de dispositif de chauffage, il est communément employé une solution du point de vue de leur conception, qui consiste à noyer dans une plaque ou un panneau en matériau réfractaire, une résistance électrique chauffante. Pour une question de tenue mécanique, ces plaques ou panneaux en matériau réfractaire sont fréquemment de dimension réduite. Aussi, il est nécessaire de juxtaposer plusieurs de ces plaques ou panneaux et de raccorder, entre elles, les différentes résistances électriques, pour obtenir la puissance de chauffe souhaitée. Ces différentes plaques ou panneaux sont maintenus assemblés au moyen d'une structure métallique sous forme d'un cadre. L'ensemble reçoit, alors, un habillage souvent en tôle, pour conférer, à l'ensemble, une esthétique acceptable.

Par conséquent, l'on constate que les dispositifs de chauffage, sous forme de panneaux, tels qu'ils viennent d'être décrits, sont, d'une part, d'une conception relativement compliquée nécessitant, pour leur montage une main-d'oeuvre qualifiée en raison de la multitude de pièces à assembler. A noter, à ce propos, que l'ensemble reçoit, nécessairement, un habillage, qui, bien qu'il soit généralement en tôle et bon marché, doit être, lui aussi, assemblé et fixé sur la structure de base du dispositif de chauffage.

Parallèlement, il est connu de faire appel, en tant que matériau réfractaire servant de support à la résistance électrique chauffante, à une plaque de marbre dans laquelle sont fraisées des ouvertures, à l'intérieur de celles-ci étant disposés des enroulements de fils électriques correspondant à la résistance chauffante. Dans ces ouvertures est, ensuite, coulé un béton réfractaire rendant l'ensemble solidaire.

Cette solution, n'est évidemment pas plus économique que celle précédemment décrite. En effet, il faut, tout d'abord, concevoir la plaque de marbre qui, en soi, est onéreuse. Dans cette plaque de marbre il faut ensuite fraiser des ouvertures, opération qui ne peut se faire qu'à l'aide d'un outillage spécifique et, donc, coûteux. Finalement, l'ensemble s'avère peu esthétique, de sorte qu'il est nécessaire, là encore, de faire appel à un habillage approprié.

Il est encore connu, par le document EP-A-0.357.945, une plaque composite en céramique comprenant une couche centrale en céramique laquelle est recouverte d'un film chauffant, par exemple à base de graphite. Sur cette dernière l'on vient faire adhérer, au moyen d'une colle isolante, une couche supérieure constituée, substantiellement, par un carreau en céramique. Celui-ci déborde, quelque peu, en périphérie de la couche centrale -laquelle est ensuite recouverte, au niveau de sa face inférieure et sur son pourtour, par un liant approprié.

Cette construction fait intervenir des matériaux complexes, plus particulièrement une colle isolante et un autre liant, qui sont forcément onéreux car destinés à supporter des contraintes importantes liées aux variations de température. De tels matériaux posent, en outre, des problèmes de tenue dans le temps.

Il est également connu, au travers du document GB-A-2.265.211 un dispositif de chauffage électrique qui se présente sous la forme d'une tuile, d'une plaque ou analogue. Un tel dispositif nécessite, pour sa fabrication, un moule à l'intérieur duquel est étalée une couche de gel coat en résine polyester venant former une coquille constituant, ultérieurement, la face apparante dudit dispositif. A l'intérieur de cette coquille est, ensuite, disposée une couche d'un matériau composite à base de fibre de verre et de résine polyester dans laquelle sont implantés des picots ou plots. Sur ces derniers est fixé le fil électrique définissant la résistance chauffante, laquelle est alors noyée dans un matériau destiné à retarder la propagation de flammes et qui est à base de sable, de ciment ou d'un polymère. Ce matériau définit une couche d'épaisseur de l'ordre de 1 cm. Pour finir un panneau isolant est noyé entre deux couches successives d'un matériau composite, là encore, à base de fibres de verre et de résine polyester.

Finalement, on connaît par le document GB-1.164.285 un dispositif de chauffage électrique adoptant la forme d'un panneau mural. Ce dispositif de chauffage comporte un coffrage perdu défini par un cadre pourvu d'un fond constitué par un panneau externe dorsal recouvert, intérieurement, par une couche en fibre de verre par dessus laquelle est disposé un bloc de béton. Dans ce coffrage perdu, partiellement assemblé, est coulée une première couche de béton réfractaire à l'intérieur de laquelle est introduite, avant son séchage, une résistance chauffante. Cette dernière est, en fait, constituée par un serpentin d'une résistance électrique disposée, de manière sinueuse, par dessus des barres d'espacement spécialement adaptées. Après la mise en place de cette résistance chauffante, il est coulé dans le coffrage perdu une seconde couche de béton réfractaire, d'une part, destinée à noyer ladite résistance et, d'autre part, par dessus laquelle sont disposés des carreaux en céramique aptes à constituer la face apparente dudit dispositif de chauffage électrique.

Par conséquent, la présente invention se veut à même de répondre à l'ensemble des inconvénients précités, ceci au travers d'un dispositif de chauffage électrique en forme d'un panneau mural qui allie, à la fois, simplicité de conception, tenue mécanique, efficacité et esthétique.

A cet effet, l'invention concerne un dispositif de chauffage électrique, tout particulièrement sous forme d'un panneau mural, comportant sur sa face apparente, des carreaux en céramique, notamment en faïence, définissant, avec un cadre en un matériau approprié, un coffrage perdu à l'intérieur duquel est coulé un béton réfractaire, dans ce dernier étant noyée une résistance électrique chauffante, caractérisé par le fait que ledit cadre comporte, au niveau du côté interne, en contact avec le béton réfractaire, des moyens d'ancrage favorisant son adhésion, dans ce béton réfractaire étant, en outre, noyé un treillis métallique ou analogue constituant le support de la résistance électrique chauffante.

L'invention concerne, également, un procédé de fabrication d'un dispositif de chauffage conforme à l'invention caractérisé en ce que:
- on dispose sur une surface plane et de manière juxtaposée des carreaux en céramique ;
- on cercle lesdits carreaux juxtaposés par un cadre de manière à définir un coffrage perdu ;
- on dispose à l'intérieur de ce coffrage défini par le cadre et les carreaux en céramique un treillis métallique sur lequel on a, préalablement, fixé le ou les cordons de la résistance électrique chauffante ;
- et on coule à l'intérieur du coffrage un béton réfractaire.

Les avantages découlant de la présente invention consistent en ce qu'une simple opération de coulée de béton réfractaire permet de rendre solidaire, définitivement, l'ensemble des éléments composant le dispositif de chauffage. De plus, les carreaux en céramique, ainsi que le cadre, dont l'esthétique pourra être choisie en fonction des souhaits de l'usager, permettant de s'affranchir d'un habillage additionnel qui, d'un point de vue ornemental suscite des avis plus que partagés. Par conséquent, la présente invention répond de manière avantageuse à un besoin, exprimé depuis de longue date, par les usagers.

La présente invention est exposée plus en détail dans la description qui va suivre se rapportant à un mode de réalisation qui n'est donné qu'à titre d'exemple.

La compréhension de cette description sera facilitée en se référant au dessin joint en annexe.
- la figure 1 est une vue schématisée et en perspective d'un dispositif de chauffage électrique conforme à l'invention ;
- la figure 2 est une représentation schématisée et en coupe verticale du dispositif de chauffage illustré dans la figure 1 ;
- la figure 3 est une vue schématisée et en coupe horizontale de ce dispositif de chauffage ;
- la figure 4 est une vue schématisée et en plan du treillis métallique servant de support au cordon de la résistance électrique chauffante.

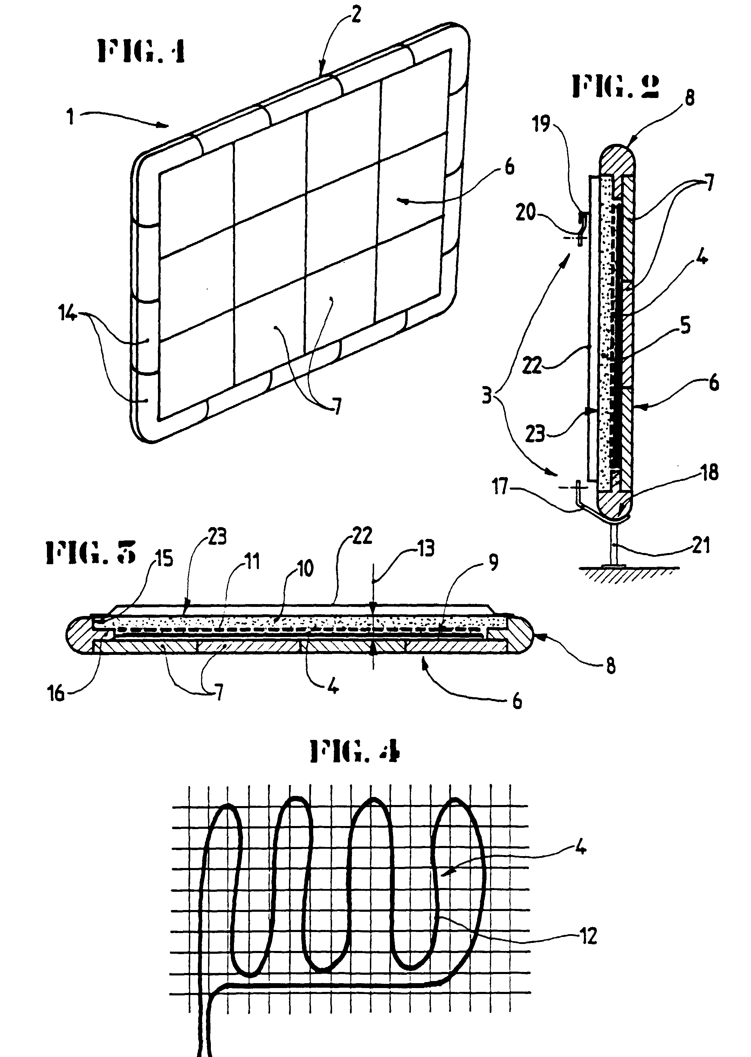

Telle que représentée dans la figure 1 du dessin ci-joint, la présente invention est relative à un dispositif de chauffage électrique 1 se présentant, plus particulièrement, sous forme d'un panneau mural 2 et qui, par conséquent, peut être fixé contre le mur d'une pièce par l'intermédiaire de moyens supports 3 appropriés, tel que visible dans la figure 2 et qui seront exposés plus en détail dans la description qui va suivre.

En fait, ce dispositif de chauffage électrique 1 comporte une résistance électrique chauffante 4, visible dans les figures 2 à 4, laquelle est noyée dans un matériau réfractaire 5 se présentant sous forme d'une plaque ou d'un panneau.

En fait, selon l'invention, le panneau mural 2 que définit ce dispositif de chauffage 1, comporte, sur sa face apparente 6, des carreaux en céramique 7, notamment des carreaux en faïence. En fait, ces carreaux en céramique 7 sont juxtaposés les uns par rapport aux autres selon un dessin prédéterminé, jusqu'à atteindre, sensiblement, les dimensions et la forme souhaitée du panneau mural 2. Tout particulièrement, la disposition de ces carreaux en céramique 7 tout comme leur couleur, leur forme, leur relief, etc... peuvent éventuellement, être librement choisis par un usager dans une large gamme de produits. Aussi, il est parfaitement envisageable de personnaliser l'esthétique de ces dispositifs de chauffage électrique 1.

De plus, selon l'invention, ces carreaux en céramique 7 sont cerclés par un cadre 8 qui, lui, peut être conçu en un matériau approprié quelconque. Par exemple, ce cadre 8 peut être métallique ou encore en matière synthétique résistant en température ou, tout comme visible dans la figure 1, il peut être conçu par des éléments en céramique, plus particulièrement en faïence. Ainsi, ce cadre 8, contribuant, finalement, à l'esthétique de l'appareil, peut être proposé par le fabriquant, dans différentes variantes de réalisation selon les matériaux mis en oeuvre. Différents contours extérieurs et plusieurs couleurs sont, également, susceptibles d'être proposés par le fabriquant.

En définitive, selon l'invention, ce cadre 8 a pour fonction de définir avec les carreaux en céramique 7 correspondant à la face apparente 6 du panneau mural 2, un coffrage perdu 9 plus particulièrement visible dans la figure 3. A l'intérieur de ce coffrage perdu 9 est, alors, coulé un béton réfractaire 10. Dans ce béton est noyé un treillis métallique ou analogue 11 à même de conférer à l'ensemble la résistance mécanique requise. Ce treillis métallique 11 a, par ailleurs, pour fonction de servir de support au cordon 12 correspondant à la ou les résistances électriques 4 que l'on vient, également, noyer dans ledit béton réfractaire 10. A ce propos la résistance électrique 4 est, préférentiellement, plaquée contre la face arrière des carreaux en céramique 7 ce qui a l'avantage, lors de la mise en route du dispositif de conduire à un chauffage rapide de ces carreaux en céramique 7 alors que le béton réfractaire sera chauffé dans un deuxième temps. Cette particularité est intéressante dans la mesure où elle permet un chauffage rapide et une accumulation de chaleur d'où résulte une régularité de chauffe.

Le cordon 12 correspondant à une résistance électrique 4 se présente sous forme d'un fil électrique s'étendant à l'intérieur d'une gaine isolante qui, en dehors de ses caractéristiques d'isolant, joue également le rôle de par sa souplesse, de moyens d'absorption des variations dimensionnelles des éléments sous l'effet de la température. En fait, le cordon 12 est maintenu sur le treillis 11 à l'aide de moyens d'agrafage appropriés.

Finalement, au vu de ce qui précède, l'on constate que pour concevoir un dispositif de chauffage selon l'invention, l'on dispose, sur une surface plane, les carreaux en céramique 7. Puis l'on positionne, autour, le cadre 8. A ce propos, l'on remarquera qu'il est également envisageable d'inverser ces opérations et de positionner, tout d'abord, le cadre 8 sur une surface plane, à l'intérieur de ce cadre, dans le fond, étant juxtaposés les carreaux en céramique 7.

Dans le coffrage perdu 9 est, alors, coulé le béton réfractaire 10. Bien entendu, l'on y aura disposé, au préalable, le treillis 11 équipé de la résistance électrique chauffante 4, de telle manière à plaquer celle-ci contre les carreaux en céramique 7. Finalement, l'épaisseur 13 du béton réfractaire correspond, sensiblement, à la hauteur du décrochement produit par le cadre 8 par rapport à la face interne aux carreaux en céramique 7.

Par conséquent, l'on s'aperçoit que par une simple opération de coulée de béton, l'ensemble des pièces composant le dispositif de chauffage 1 est maintenu, parfaitement, assemblé. A ce propos, si le cadre 9 est constitué d'éléments en céramique 14, ceux-ci comportent, préférentiellement, au niveau de leur côté interne 15 en contact avec le béton réfractaire 10, des moyens d'ancrage 16 évitant leur décollement ultérieur. Ainsi, ces moyens d'ancrage 16, tels que représentés dans les figures 2 et 3, peuvent se présenter sous forme d'une languette ayant pour conséquence d'augmenter la surface de contact avec le béton réfractaire 10 et, de ce fait, d'améliorer l'adhésion des éléments en céramique 14. Bien entendu, l'on peut envisager, d'autres modes de réalisation de ces moyens d'ancrage 16. Ils peuvent, notamment, se présenter sous forme d'agrafes ou analogues.

Un tel panneau mural 2, correspondant au dispositif de chauffage électrique conforme à l'invention, est destiné, à être fixé contre une cloison d'une pièce et, pour cela, il est fait appel à des moyens supports 3. Ceux-ci sont constitués, principalement, par une ou plusieurs consoles 17 susceptibles d'être rapportées, par l'intermédiaire de moyens de fixation appropriés, contre un mur. Sur ces consoles 17 vient, alors, reposer, par son chant inférieur 18, le panneau mural 2. Ces moyens supports 3 sont complétés par un ou plusieurs crochets 19 rendus solidaires, à l'arrière et en partie supérieure, du panneau mural 2, ces crochets 19 étant destinés à coopérer avec des moyens d'accrochage complémentaires 20 solidaires de la paroi, ceci de manière à éviter le basculement dudit panneau mural 2.

Au cas où la paroi contre laquelle doit être rapporté le panneau mural 2 s'avère peu appropriée pour supporter des charges relativement importantes, il convient d'observer que la ou les consoles 17 sont en mesure d'être équipées de pieds supports réglables 21 à même d'assurer le report de ce poids dudit panneau mural 2 sur le sol.

Quant aux crochets 19, ceux-ci peuvent être fixés, non pas directement sur le béton réfractaire 10 mais sur un panneau réflecteur 22 ayant, pour première fonction, de refléter, vers l'avant, la chaleur rayonnée vers l'arrière, par le panneau mural 2. En outre, ce panneau réflecteur 22 respecte un léger espacement par rapport à la face arrière 23 du panneau mural 2 de sorte qu'une circulation d'air puisse s'instaurer entre eux évitant une surchauffe de la paroi de la pièce. Il en résulte, également, un chauffage par convection au travers du dispositif conforme à l'invention.

## Revendications

1. Dispositif de chauffage électrique, tout particulièrement sous forme d'un panneau mural (2), comportant sur sa face apparente (6), des carreaux en céramique, notamment en faïence, définissant, avec un cadre (8) en un matériau approprié, un coffrage perdu (9) à l'intérieur duquel est coulé un béton réfractaire (10), dans ce dernier étant noyée une résistance électrique chauffante (4), caractérisé par le fait que ledit cadre (8) comporte, au niveau du côté interne (15), en contact avec le béton réfractaire (10), des moyens d'ancrage (16) favorisant son adhésion, dans ce béton réfractaire étant, en outre, noyé un treillis métallique ou analogue (11) constituant le support de la résistance électrique chauffante (4).

2. Dispositif de chauffage électrique selon la revendication 1, caractérisé par le fait que dans le béton réfractraire (10) est noyé un treillis métallique ou analogue (11) constituant le support de la résistance électrique chauffante (4).

3. Dispositif de chauffage électrique selon l'une quelconque des revendications précédentes, caractérisé par le fait que ledit cadre (8) est constitué par des éléments en céramique (14), notamment en faïence, comportant au niveau de leur côté interne (15), en contact avec le béton réfractaire (10), lesdits moyens d'ancrage (16).

4. Dispositif de chauffage électrique selon la revendication 3, caractérisé par le fait que les moyens d'ancrage (16) se présentent sous forme d'une languette ayant pour conséquence d'augmenter la surface de contact des éléments en céramique (14) avec le béton réfractaire (10).

5. Dispositif de chauffage électrique selon l'une quelconque des revendications précédentes, caractérisé par le fait qu'un cordon (12) correspondant à une résistance électrique (4) se présente sous forme d'un fil électrique s'étendant à l'intérieur d'une gaine isolante souple à même d'absorber les variations dimensionnelles des éléments sous l'effet de la température.

6. Dispositif de chauffage électrique selon l'une quelconque des revendications précédentes, caractérisé par le fait que la résistance électrique chauffante (4) est plaquée contre la face arrière des carreaux en céramique (7).

7. Dispositif de chauffage électrique selon l'une quelconque des revendications précédentes, caractérisé par le fait qu'il comporte un panneau réflecteur (22) disposé à l'arrière du panneau mural (2) tout en respectant avec la face arrière (23) de ce dernier, un espacement autorisant une circulation d'air par convection.

8. Dispositif de chauffage électrique selon l'une quelconque des revendications précédentes, caractérisé par le fait qu'il comporte des moyens supports (3) pour sa fixation contre une cloison, ces moyens supports (3) étant constitués, d'une part, par une ou plusieurs consoles (17) destinées à être rapportées contre la cloison et sur la ou lesquelles repose le panneau mural (2) par son chant inférieur (18) et, d'autre part, par un ou plusieurs crochets (19) rendus solidaires à l'arrière et en partie supérieure du panneau mural (2), ces crochets (19) étant destinés à coopérer avec des moyens d'accrochage complémentaires (20) rendus solidaires de la cloison.

9. Procédé pour la fabrication d'un dispositif de chauffage électrique selon l'une quelconque des revendications précédentes, caractérisé par le fait que
- on dispose sur une surface plane et de manière juxtaposée des carreaux en céramique (7) ;
- on cercle lesdits carreaux (7) juxtaposés par un cadre (8) de manière à définir un coffrage perdu (9) ;
- on dispose à l'intérieur de ce coffrage (9) défini par le cadre (8) et les carreaux en céramique (7) un treillis métallique (11) sur lequel on a, préalablement, fixé le ou les cordons de la résistance électrique chauffante (4), de telle manière à plaquer celle-ci contre les carreaux en céramique (7) ;
- et on coule à l'intérieur du coffrage (9) un béton réfractaire (10).

## Patentansprüche

1. Elektrisches Heizelement, insbesondere in der Form einer Wandplatte (2), umfassend, an seiner sichtbaren Fläche (6), Keramik-, nämlich Steingutkacheln, die zusammen mit einem Rahmen (8) aus einem geeigneten Material eine verlorene Schalung (9) definieren, in der ein feuerfester Beton (10) gegossen ist, wobei in diesem letzten ein elektrischer Heizwiderstand (4) eingebettet ist, dadurch gekennzeichnet, daß der genannte Rahmen (8) im Bereich der Innenseite (15) in Berührung mit dem feuerfesten Beton (10) Verankerungsmittel (16) umfaßt, die dessen Haftung fördern, wobei in diesem feuerfesten Beton außerdem ein Metallgitter oder dergleichen (11), das den Träger des elektrischen Heizwiderstands (4) bildet, eingebettet ist.

2. Elektrisches Heizelement nach Anspruch 1, dadurch gekennzeichnet, daß im feuerfesten Beton (10) ein Metallgitter oder dergleichen (11), das den Träger des elektrischen Heizwiderstands (4) bildet, eingebettet ist.

3. Elektrisches Heizelement nach irgendeinem der vorgehenden Ansprüche, dadurch gekennzeichnet, daß der genannte Rahmen (8) aus Keramik-, nämlich Steingutelementen (14) besteht, die im Bereich ihrer Innenseite (15) in Berührung mit dem feuerfesten Beton (10) die genannten Verankerungsmittel (16) umfassen.

4. Elektrisches Heizelement nach Anspruch 3, dadurch gekennzeichnet, daß die Verankerungsmittel (16) als eine Zunge ausgestaltet sind, woraus sich eine Erhöhung der Berührungsfläche zwischen den Keramikelementen (14) und dem feuerfesten Beton (10) ergibt.

5. Elektrisches Heizelement nach irgendeinem der vorgehenden Ansprüche, dadurch gekennzeichnet, daß eine Schnur (12), die einem elektrischen Widerstand (4) entspricht, als ein elektrisches Kabel ausgestaltet ist, das sich in einer biegsamen Hülle erstreckt, die geeignet ist, die Abmessungsänderungen der Elemente unter der Wirkung der Temperatur aufzunehmen.

6. Elektrisches Heizelement nach irgendeinem der vorgehenden Ansprüche, dadurch gekennzeichnet, daß der elektrische Heizwiderstand (4) an der Hinterfläche der Keramikkacheln (7) angebracht ist.

7. Elektrisches Heizelement nach irgendeinem der vorgehenden Ansprüche, dadurch gekennzeichnet, daß es eine reflektierende Fläche (22) umfaßt, die an der Hinterseite der Wandplatte (2) angeordnet ist, während bezüglich der Hinterseite (23) dieses letzten ein Abstand erhalten wird, der eine Luftströmung durch Konvektion erlaubt.

8. Elektrisches Heizelement nach irgendeinem der vorgehenden Ansprüche, dadurch gekennzeichnet, daß es Tragmittel (3) zur Befestigung desselben an eine Trennwand umfaßt, wobei diese Tragmittel (3), einerseits, aus einem oder mehreren Tragarmen (17), die dazu vorgesehen sind, an die Trennwand befestigt zu werden, und auf denen die Wandplatte (2) mit ihrem unteren Rand (18) ruht, und, andererseits, aus einem oder mehreren, fest mit der Hinterseite und dem oberen Teil der Wandplatte (2) verbundenen Häken (19) bestehen, wobei diese Häken (19) dazu bestimmt sind, mit ergänzenden, fest mit der Trennwand verbundenen Kupplungsmitteln (29) zusammenzuwirken.

9. Verfahren zur Herstellung eines elektrischen Heizelements nach irgendeinem der vorgehenden Ansprüche, dadurch gekennzeichnet, daß:
- Keramikkacheln (7) nebeneinanderstehend auf eine flache Oberfläche angeordnet werden;
- die genannten nebeneinanderstehenden Kacheln (7) von einem Rahmen (8) so umringt werden, daß eine verlorene Schalung (9) definiert wird;
- in diese durch den Rahmen (8) und die Keramikkacheln (7) definierte Schalung (9) ein Metallgitter (11), an dem die Schnur bzw. Schnüre des elektrischen Heizwiderstands (4) vorher befestigt worden sind, angeordnet wird, sodaß dieser letzte gegen die Keramikkacheln (7) angebracht wird;
- und in die Schalung (9) ein feuerfester Beton (10) gegossen wird.

## Claims

1. Electric heater, in particular in the form of a wall panel (2), including, on its visible face (6), ceramic, viz. earthenware, tiles defining, together with a frame (8) made of an adequate material, a lost casing (9) inside which is cast refractory concrete (10), in the latter being embedded an electric heating resistor (4), characterised in that said frame (8) includes, at the level of the inner side (15) into contact with the refractory concrete (10), anchoring means (16) favouring its adhesion, in this refractory concrete being, in addition, embedded a metal wire netting or the like (11) forming the support for the electric heating resistor (4).

2. Electric heater according to claim 1, characterised in that in the refractory concrete (10) is embedded a metal wire netting or the like (11) forming the support for the electric heating resistor (4).

3. Electric heater according to any one of the preceding claims, characterised in that said frame (8) is comprised of ceremic, viz. earthenware, elements (14) including, at the level of their inner side (15) into contact with the refractory concrete (10), said anchoring means (16).

4. Electric heater according to claim 3, characterised in that the anchoring means (16) are in the form of a tongue, which results into increasing the contact area between the ceramic elements (14) and the refractory concrete (10).

5. Electric heater according to any one of the preceding claims, characterised in that a cord (12) corresponding to an electric resistor (4) is in the form of an electric wire extending inside a flexible insulating sheathing capable of absorbing the dimensional changes of the elements under the action of the temperature.

6. Electric heater according to any one of the preceding claims, characterised in that the electric heating resistor (4) is applied against the rear face of the ceramic tiles (7).

7. Electric heater according to any one of the preceding claims, characterised in that it includes a reflecting panel (22) arranged at the rear of the wall panel (2) while maintaining with respect to the rear face (23) of the latter a distance allowing an air flow through convection.

8. Electric heater according to any one of the preceding claims, characterised in that it includes supporting means (3) for fixing it to a partition wall, these supporting means (3) being formed, on the one hand, of one or several brackets (17) aimed at being inserted against the partition wall and on which the wall panel (2) rests through its lower edge (18) and, on the other hand, of one or several hooks (19) made integral with the rear and the upper portion of the wall panel (2), these hooks (19) being aimed at cooperating with complementary hooking-in means (29) made integral with the patition wall.

9. Method for manufacturing an electric heater according to any one of the preceding claims, characterised in that:
- ceramic tiles (7) are arranged juxtaposed on a flat surface;
- said juxtaposed tiles (7) are bound with a frame (8), so as to define a lost casing (9);
- inside this casing (9) defined by the frame (8) and the ceramic tiles (7) is arranged a metal wire netting (11) to which the cord or cords of the electric heating resistor (4) have previously been fixed, so as to apply the latter against the ceramic tiles (7);
- and inside the casing (9) is cast a refractory concrete (10).
